# EUROPEAN PATENT APPLICATION

(11) **EP 2 388 686 A1**
(43) Date of publication of application: **23.11.2011**
(21) Application number: 10195085.5
(22) Date of filing: 15.12.2010
(51) Int. Cl.: G06F 3/14, G09G 5/00

(54) **Image processing device and image signal processing system**

(30) Priority: 19.05.2010 TW 099116013
(71) Applicant: Silicon Integrated Systems Corp., Hsinchu City, Chinese Taipei (CN)
(72) Inventor: Shih, Ching-Chang, Hsinchu City (TW); Chen, Kuan-Yu, Hsinchu City (TW); Chen, Yen-Yu, Hsinchu City (TW)
(74) Representative: Viering, Jentschura & Partner

(57) **Abstract**

An image signal processing system is presented, which includes a computer, a master image processing device, and at least one slave image processing device. The master image processing device is used for receiving an image signal. The master image processing device includes a master signal conversion device and a master signal output device. The master signal conversion device is used for converting the image signal into an instruction signal, and the master signal output device is used for outputting the instruction signal. The slave image processing device includes a slave signal input device, a slave signal conversion device, and a GPU. The slave signal input device is used for receiving the instruction signal. The slave signal conversion device is used for selectively converting the instruction signal into an image signal according to the instruction signal. The GPU is used for receiving the image signal and generating a broadcasting signal.

## Description

### BACKGROUND OF THE INVENTION

### Field of the Invention

The present invention relates to an image signal processing system, and more particularly to an image signal processing system capable of freely expanding the number of connected screens.

### Related Art

Conventionally, an image signal and an instruction signal of a personal computer are connected from a north bridge chip set to a Graphic Processor Unit (GPU) through a Peripheral Component Interconnection (PCI), Accelerated Graphic Port (AGP) or Peripheral Component Interconnection Express (PCIE) bus. Then, the GPU generates a display signal according to the image signal and the instruction signal. The display signal is transmitted to a display device through a standard analog transmission device (for example, a Video Graphics Array (VGA) interface) or a digital transmission device (for example, a Digital Video Interface (DVI), High Definition Multimedia Interface (HDMI) or DisplayPort interface), such that the image signal can be displayed on the display device.

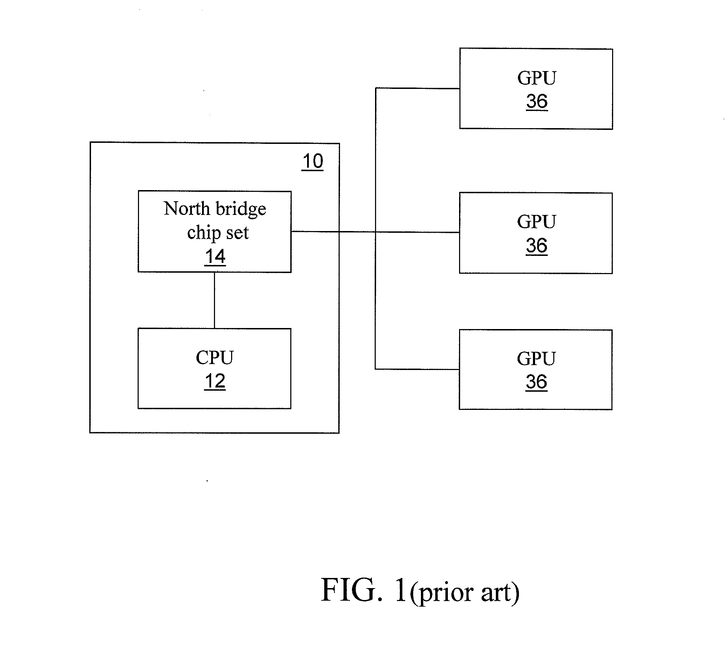

In some special occasions such as multi-screen systems and multimedia teaching, a personal computer is connected to a plurality of screens. FIG. 1 is an architectural view of a display device of a personal computer in the prior art. Referring to FIG. 1, the architecture uses a personal computer 10, and the personal computer 10 includes a central processing unit (CPU) 12 and a north bridge chip set 14. In general, a plurality of slots is disposed on a main board of the personal computer. By using the slots, the north bridge chip set 14 may be connected to a plurality of GPUs 36, and then the GPUs 36 are respectively connected to a plurality of screens. However, limited by the number of slots on the main board and system resources, the personal computer can only be connected to a limited number of screens. Therefore, the architecture is not convenient to use.

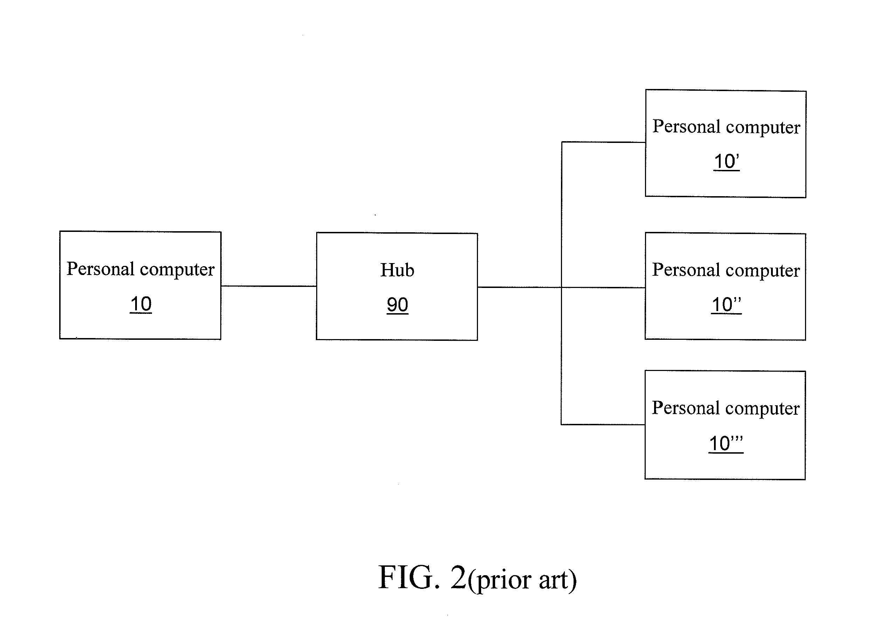

If it intends to expand the number of connected screens, the personal computer may also be connected to a plurality of screens through the Internet and a hub. FIG. 2 is an architectural view of a display device of a network system in the prior art. Referring to FIG. 2, the network system uses a hub 90 to connect a plurality of computers 10, 10', 10" and 10"', and the computer 10 serves as a host, which can transmit a display signal to the computers 10', 10" and 10"' through the hub 90. However, all the screens still respectively require a personal computer, so as to receive the signal transmitted through the Internet. That is to say, the same number of personal computers as the number of screens must be provided, so as to construct such a multi-screen system. Therefore, the use of the Internet and the hub to expand the number of screens results in a rather high cost of the whole system.

### SUMMARY OF THE INVENTION

In view of the above problems, the present invention provides an image processing device.

The image processing device comprises a slave signal input device, a slave signal conversion device, and a GPU. The slave signal input device is used for receiving an instruction signal. The slave signal conversion device is used for selectively converting the instruction signal into an image signal according to the instruction signal. The GPU is used for receiving the image signal and generating a broadcasting signal.

The present invention further provides an image signal processing system. The image signal processing system comprises a master image processing device and at least one slave image processing device. The master image processing device is used for receiving an image signal. The master image processing device comprises a master signal conversion device and a master signal output device. The master signal conversion device is used for converting the image signal into an instruction signal, and the master signal output device is used for outputting the instruction signal.

The slave image processing device comprises a slave signal input device, a slave signal conversion device, and a GPU. The slave signal input device is used for receiving the instruction signal. The slave signal conversion device is used for selectively converting the instruction signal into an image signal according to the instruction signal. The GPU is used for receiving the image signal and generating a broadcasting signal.

In addition, the present invention further provides an image signal processing system, which comprises a computer, a master image processing device, and at least one slave image processing device. The computer comprises a CPU and a north bridge chip set. The CPU is used for generating an image signal. The north bridge chip set is electrically connected to the CPU, and used for transmitting the image signal. The master image processing device and the slave image processing device have the same architecture as that described above.

Based on the above, the present invention enables the computer to be connected in parallel or in series with a plurality of slave image processing devices through the master image processing device. Therefore, the present invention can freely expand the number of connected screens without being limited by the number of slots disposed on the main board and system resources. Moreover, a user can respectively control the pictures to be displayed on different screens through the computer.

### BRIEF DESCRIPTION OF THE DRAWINGS

The present invention will become more fully understood from the detailed description given herein below for illustration only, and thus are not limitative of the present invention, and wherein:
FIG. 1 is an architectural view of a display device of a personal computer in the prior art;
FIG. 2 is an architectural view of a display device of a network system in the prior art;
FIG. 3 is a system block diagram of a slave image processing device according to the present invention;
FIG. 4 is a schematic block diagram of slave image processing devices connected in series according to the present invention;
FIG. 5 is a schematic block diagram of a master image processing device and a slave image processing device connected in series according to the present invention;
FIG. 6 is a schematic block diagram of an image signal processing system according to the present invention;
FIG. 7 is a view illustrating a connection relation of an image signal processing system according to the present invention; and
FIG. 8 is a view illustrating a connection relation of an image signal processing system according to the present invention.

### DETAILED DESCRIPTION OF THE INVENTION

The detailed features and advantages of the present invention are described in detail below in great detail through the following embodiments, the content of the detailed description is sufficient for those skilled in the art to understand the technical content of the present invention and to implement the present invention there accordingly. Based upon the content of the specification, the claims, and the drawings, those skilled in the art can easily understand the relevant objectives and advantages of the present invention.

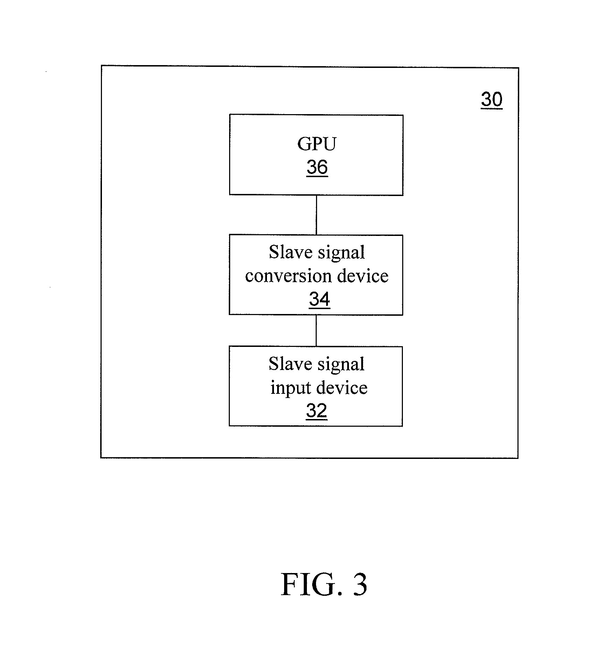

FIG. 3 is a system block diagram of a slave image processing device according to the present invention. A slave image processing device 30 comprises a slave signal input device 32, a slave signal conversion device 34, and a GPU 36.

The slave signal input device 32 is used for receiving an instruction signal. The instruction signal contains a control instruction and an image signal at the same time. In detail, the instruction signal may be used for controlling data read/write, controlling memory read/write, and controlling the status of the GPU 36. Data of the instruction signal may at least comprise CMD (command instruction), Mode (mode selection), ID (identification code), WAdr (position for writing data), Wdata (write data), RAdr (position for reading data) and Rdata (read data).

The ID (identification code) may be used for designating a destination to which the instruction signal is to be transmitted. The slave signal conversion device 34 pre-stores a preset code. If the slave signal conversion device 34 determines that the identification code is identical to the preset code, indicating that the slave signal conversion device 34 is the designated destination, the slave signal conversion device 34 converts the instruction signal into digital image data. If the slave signal conversion device 34 determines that the identification code is different from the preset code, indicating that the current slave signal conversion device 34 is not the designated destination, the instruction signal may bypass the slave signal conversion device 34.

After being slavejected to an encoding mode compatible with a DVI, HDMI, or Displayport data format, the instruction signal is transmitted to the slave signal input device 32 using a DVI, HDMI, or Displayport transmission interface. That is to say, the slave signal input device 32 adopts a DVI, HDMI, or Displayport transmission interface.

The slave signal conversion device 34 is used for converting the instruction signal into digital image data. The digital image data is provided to the GPU 36. The digital image data may be encoded into a signal in a PCI, PCIE, or AGP format. For the PCIE format, the digital image data may be of the following types: Configure Read/Write, IO Read/Write, and Memory Read/Write.

The GPU 36 is used for receiving the image signal and generating a broadcasting signal. The broadcasting signal may be provided to a display device to play an image. The GPU 36 may comprise an image memory, an image decoder, a graphic processor, and an image signal generator.

The image memory may be a cache, a flash, a Dynamic Random Access Memory (DRAM), or another element with memory function. The image decoder may decode various compressed image data. The graphic processor provides accelerated processing, for example, block color filling and block transfer, of a two-dimensional or three-dimensional image required during image processing. The graphic processor executes particular complex steps in the two-dimensional or three-dimensional image at the same time by parallel computation, so as to greatly reduce the operation time and achieve the effect of accelerated processing. The image signal generator may provide a video signal to the display device after performing image modulation processing on each pixel color processed by the graphic processor. The image signal generator comprises a color look up table (LUT), a multiplexer (MUX), a gamma controller, a digital-to-analog converter (DAC), and a dither.

A format for outputting the video signal may be a computer standard or a television standard. The computer standard is, for example, a Video Graphics Array (VGA) standard, an Extended Graphics Array (XGA) standard, or a Widescreen Ultra extended Graphics Array (WUXGA)) standard. The television standard is, for example, a Phase Alternating Line (PAL) standard, a National Television System Committee (NTSC) standard, a High Definition Television (HDTV) standard, or other video signal output standards.

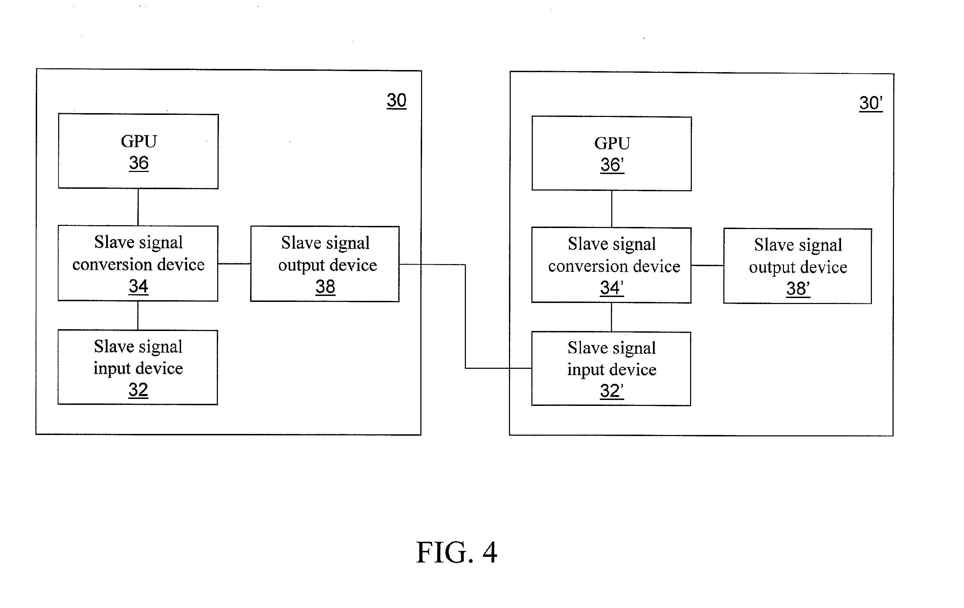

FIG. 4 is a schematic block diagram of slave image processing devices connected in series according to the present invention. In order to make the slave image processing device 30 expandable, the slave image processing device 30 further comprises a slave signal output device 38. The slave signal output device 38 is used for outputting the instruction signal.

Another slave image processing device 30' also comprises a slave signal input device 32', a slave signal conversion device 34', a GPU 36', and a slave signal output device 38'. The slave signal output device 38 is connected to the corresponding slave signal input device 32'. The instruction signal can be transmitted to the slave image processing device 30' through the slave image processing device 30. As such, the slave image processing device 30 can be connected in series with the slave image processing device 30'.

The slave image processing device 30 may be disposed in the display device, for example, integrated in a liquid crystal screen. The display device may be configured with at least one DVI or HDMI input port, and the input port is connected to the slave signal input device 32. The display device may further be configured with a DVI or HDMI output port, and the output port is connected to the signal output device 38.

The slave image processing device 30 may also be disposed separately, for example disposed in an external box. The external box may be configured with a DVI or HDMI input port, a DVI or HDMI output port, and a screen connection port. The screen connection port is connected to the GPU 36, so as to connect a screen.

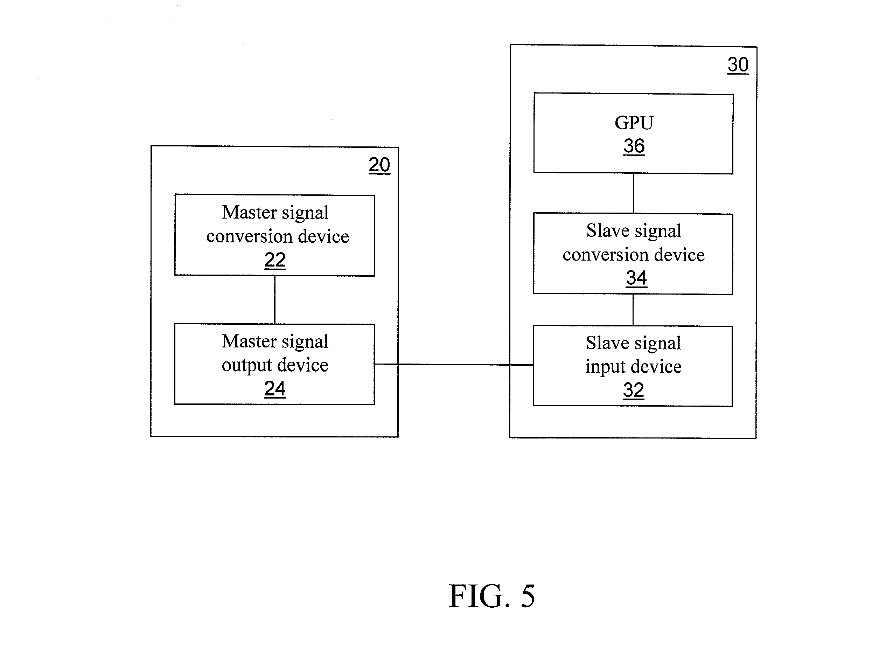

FIG. 5 is a schematic block diagram of a master image processing device and a slave image processing device connected in series according to the present invention.

A master image processing device 20 comprises a master signal conversion device 22 and a master signal output device 24. The master signal conversion device 22 is used for converting the image signal into the instruction signal. The instruction signal and the digital image data here are the same as those described above, so the details will not be described herein again. The master signal output device 24 is used for outputting the instruction signal to the slave signal input device 32 of the slave image processing device 30.

After receiving the instruction signal, the slave signal input device 32 operates according to the method as described in FIG. 3.

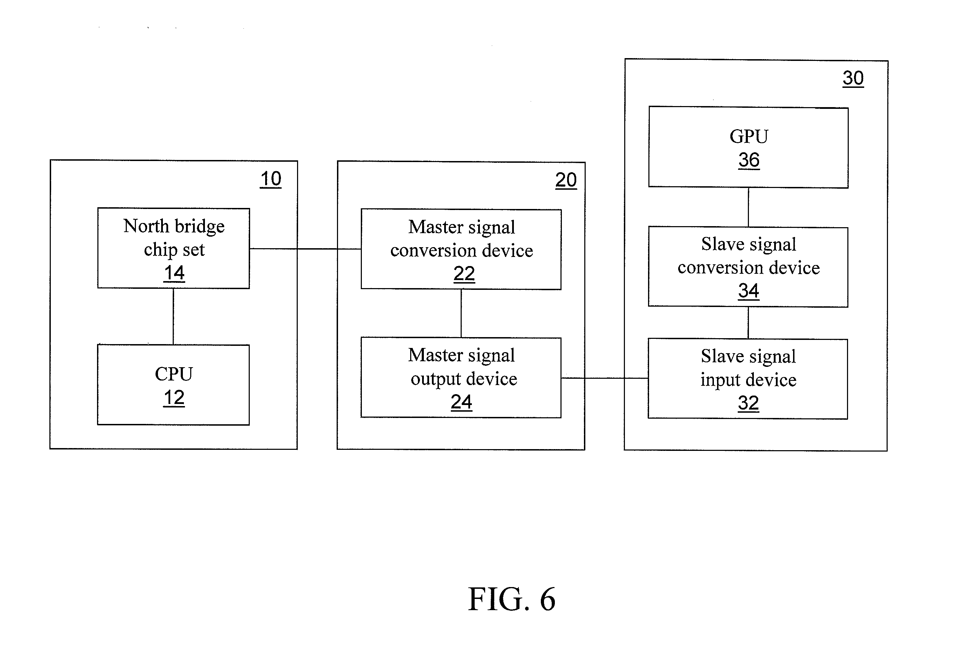

FIG. 6 is a schematic block diagram of an image signal processing system according to the present invention. A computer 10 at least comprises a CPU 12 and a north bridge chip set 14. The computer 10 may be a server or a personal computer. The CPU 12 is used for generating an image signal. The north bridge chip set 14 is used for transmitting the image signal. The north bridge chip set 14 is connected to the master signal conversion device 22 of the master image processing device 20. Then, the master signal conversion device 22 converts the image signal into an instruction signal, and the master signal output device 24 outputs the signal to the slave image processing device 30.

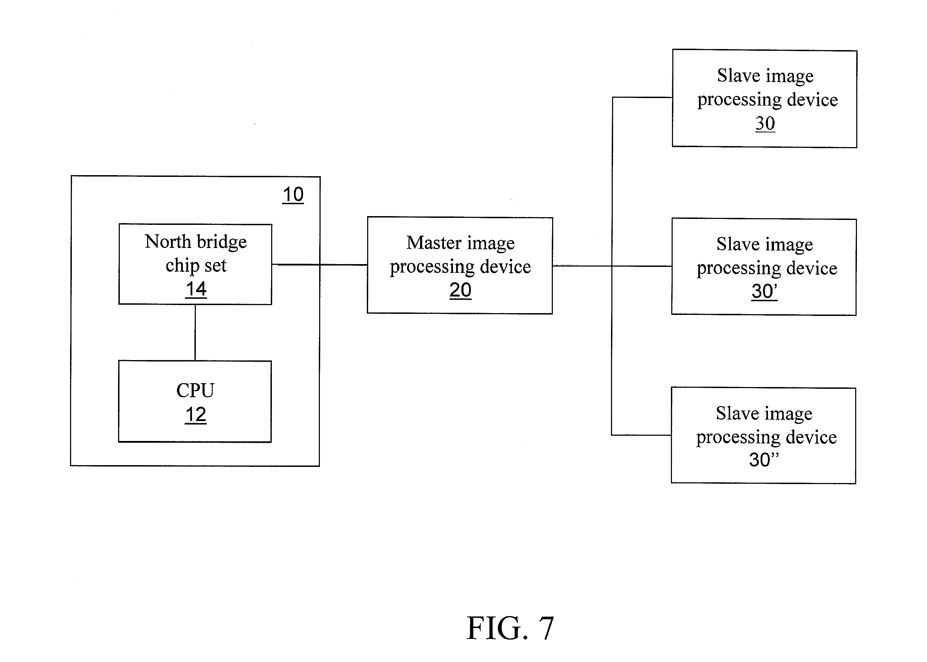

FIG. 7 is a view illustrating a connection relation of an image signal processing system according to the present invention. The master image processing device 20 is connected in parallel with the slave image processing device 30, the slave image processing device 30', and the slave image processing device 30". The master image processing device 20 must be configured with a plurality of output connection ports. The parallel connection is advantageous in that the signal delay is short.

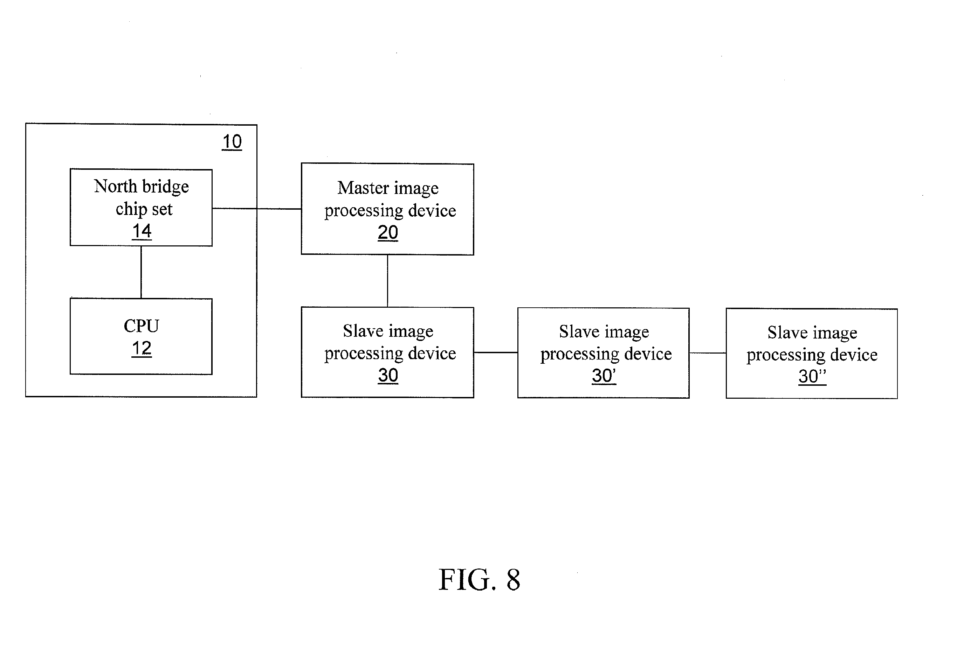

FIG. 8 is a view illustrating a connection relation of an image signal processing system according to the present invention. The master image processing device 20 is connected in series with the slave image processing device 30, the slave image processing device 30', and the slave image processing device 30". The series connection is advantageous in that the master image processing device 20 only needs a single output port, and the total length of connecting lines can be saved.

Based on the above, the present invention enables the computer 10 to be connected in parallel or in series with a plurality of slave image processing devices 30, 30' and 30" through the master image processing device 20. Therefore, the present invention can freely expand the number of connected screens without being limited by the number of slots disposed on the main board and system resources. Moreover, a user can respectively control the pictures to be displayed on different screens through the computer 10.

## Claims

1. An image processing device, comprising:
a slave signal input device, for receiving an instruction signal;
a slave signal conversion device, for selectively converting the instruction signal into an image signal according to the instruction signal; and
a Graphic Processor Unit (GPU), for receiving the image signal and generating a broadcasting signal.

2. The image processing device according to claim 1, wherein the slave signal input device adopts a Digital Video Interface (DVI), High Definition Multimedia Interface (HDMI), or DisplayPort transmission interface.

3. The image processing device according to claim 1, wherein the slave signal conversion device determines according to identification code in the instruction signal whether the identification code is identical to a preset code, and if yes, converts the instruction signal into the image signal.

4. An image signal processing system, comprising:
a master image processing device, for receiving an image signal, the master image processing device comprising:
a master signal conversion device, for converting the image signal into an instruction signal; and
a master signal output device, for outputting the instruction signal; and
at least one slave image processing device, comprising:
a slave signal input device, for receiving the instruction signal;
a slave signal conversion device, for selectively converting the instruction signal into an image signal according to the instruction signal; and
a Graphic Processor Unit (GPU), for receiving the image signal and generating a broadcasting signal.

5. The image signal processing system according to claim 4, wherein the master signal output device, the slave signal output device and the slave signal input device adopt a Digital Video Interface (DVI), High Definition Multimedia Interface (HDMI), or DisplayPort transmission interface.

6. The image signal processing system according to claim 4, further comprising a plurality of slave image processing devices, wherein the master image processing device is connected in parallel with the plurality of slave image processing devices.

7. The image signal processing system according to claim 4, wherein the slave image processing device further comprises a slave signal output device, for outputting the instruction signal.

8. The image signal processing system according to claim 7, further comprising a plurality of slave image processing devices, wherein the master image processing device is connected in series with the plurality of slave image processing devices.

9. The image signal processing system according to claim 4, wherein the slave signal conversion device determines according to an identification code in the instruction signal whether the identification code is identical to a preset code, and if yes, converts the instruction signal into the image signal.

10. An image signal processing system, comprising:
a computer, comprising:
a central processing unit (CPU), for generating an image signal; and
a north bridge chip set, electrically connected to the CPU, for transmitting the image signal;
a master image processing device, for receiving an image signal, the master image processing device comprising:
a master signal conversion device, for converting the image signal into an instruction signal; and
a master signal output device, for outputting the instruction signal; and
at least one slave image processing device, comprising:
a slave signal input device, for receiving the instruction signal;
a slave signal conversion device, for selectively converting the instruction signal into the image signal according to the instruction signal; and
a Graphic Processor Unit (GPU), for receiving the image signal and generating a broadcasting signal.

11. The image signal processing system according to claim 10, wherein the master signal output device, the slave signal output device, and the slave signal input device adopt a Digital Video Interface (DVI), High Definition Multimedia Interface (HDMI), or DisplayPort transmission interface.

12. The image signal processing system according to claim 10, further comprising a plurality of slave image processing devices, wherein the master image processing device is connected in parallel with the plurality of slave image processing devices.

13. The image signal processing system according to claim 10, wherein the slave image processing device further comprises a slave signal output device, for outputting the instruction signal.

14. The image signal processing system according to claim 13, further comprising a plurality of slave image processing devices, wherein the master image processing device is connected in series with the plurality of slave image processing devices.

15. The image signal processing system according to claim 10, wherein the slave signal conversion device determines according to an identification code in the instruction signal whether the identification code is identical to a preset code, and if yes, converts the instruction signal into the image signal.
